# EUROPEAN PATENT APPLICATION

(11) **EP 2 045 160 A1**
(43) Date of publication of application: **08.04.2009**
(21) Application number: 08017457.6
(22) Date of filing: 03.10.2008
(51) Int. Cl.: B60W 20/00, B60W 10/02, B60W 10/10, B60K 6/547

(54) **Driving unit for vehicle**

(30) Priority: 05.10.2007 JP 2007262089
(71) Applicant: AISIN AI Co., Ltd., Nishio-shi, Aichi-ken (JP)
(72) Inventor: Tanba, Toshio, Nishio-shi Aichi-ken (JP)
(74) Representative: Marshall, John Grahame

(57) **Abstract**

A driving unit for a vehicle includes plural gear sets (G1, G2, G3, G4, G5, G6, GB), plural switching clutches (C1, C2, C3, CB), a lever member (31), an output shaft (16), a motor generator (20), a separating clutch (25) provided for interrupting a force transmission between the output shaft (16) and the motor generator (20), and a separating shifter (20) supported to be movable in a direction of a selecting movement of the lever member (31) between a first position and a second position. The separating clutch (25) is connected to the separating shifter (20) to operate the separating clutch (25) to be engaged when the separating shifter (40) is located at the first position and to be released when the separating shifter (40) is located at the second position. The lever member (31) is engaged with the separating shifter (40) located at the first position when one of the gear sets for establishing the highest shift stage (G6) is selected and operates the separating shifter (40) to move to the second position.

## Description

### FIELD OF THE INVENTION

The present invention generally relates to a driving unit for a vehicle.

### BACKGROUND

As an example of a driving unit employed for a vehicle such as a hybrid-type vehicle, JP2006-166491A (hereinafter, referred to as reference 1) discloses a driving unit in which a rotational electric apparatus is directly connected to driving wheels at a further backward side than a transmission connected to an engine (directions herein correspond to an orientation of the vehicle). According to such driving unit for a vehicle, when supplied with the electric current, the rotational electric apparatus is actuated as a motor for driving the driving wheels without use of the transmission. Further, when the rotational electric apparatus is driven via an output shaft of the transmission, the rotational electric apparatus functions as a generator for generating electricity.

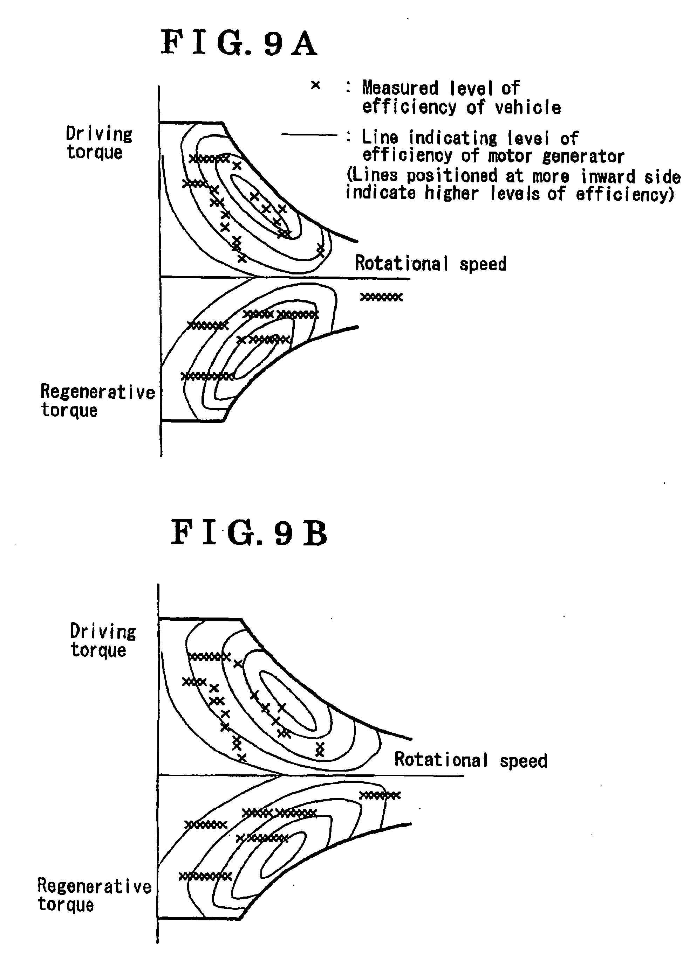

Fig. 9A schematically illustrates torque characteristics, relative to a rotational speed, of a motor generator designed for low-speed rotation. Fig. 9B schematically illustrates the torque characteristics, relative to the rotational speed, of the motor generator designed for high-speed rotation. Herein, the motor generator functions as an electric motor when supplied with the electric current from a battery. On the other hand, the motor generator functions as a generator when rotatably driven by an external force (for example, driven by driving wheels of the vehicle). An upper-half portion of the diagram illustrates a characteristic of the motor generator functioning as the motor, and a lower-half portion of the diagram illustrates a characteristic of the motor generator functioning as the generator. In Figs. 9A and 9B, plural approximately elliptic contour lines (thinner curve lines) indicate levels of efficiency of the motor generator. The contour lines positioned at more inward side indicate the higher level of efficiency of the motor generator. Plural X marks therein schematically indicate measured levels of efficiency of the vehicle. The X marks are obtained by driving the vehicle by cooperatively using the motor generator and measuring fuel efficiency by the 10-mode cycle test for rating the fuel efficiency in the 10-mode cycle of driving patterns (the 10-mode cycle test is used in Japan to measure the fuel efficiency). When comparing Figs. 9A and 9B, more number of X marks is positioned at an inner range of the contour lines in Fig. 9A than in Fig. 9B. This indicates that the fuel efficiency of the vehicle is improved by applying the motor generator for the low-speed rotation because the motor generator for the low-speed rotation is employed within a higher efficiency range more frequently in comparison with a condition where the motor generator for the high-speed rotation is applied. However, the efficiency of the motor generator for the low-speed rotation becomes lower than that of the motor generator for the high-speed rotation at a range where the rotational speed is higher. Therefore, when the vehicle is driven at high speeds with the motor generator for the low-speed rotation, heat is generated at the motor generator and the temperature of the motor generator becomes high, so that the motor generator requires to be cooled down. Further, in such a condition, fuel efficiency deteriorates.

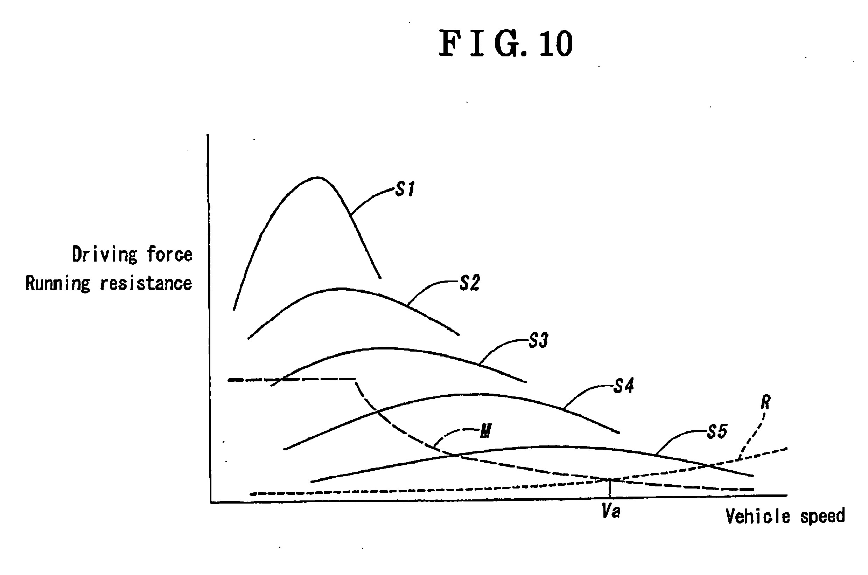

Fig. 10 illustrates characteristics of driving force and running resistance, relative to the vehicle speed, applied to the driving wheels of a vehicle including a transmission with five shift stages and the motor generator which is connected to an output shaft directly connected to the driving wheels at a backward side further than the transmission. Characteristic curves S1, S2, S3, S4 and S5 indicate the characteristics of the driving force generated by an inner combustion engine relative to the vehicle speed at first to fifth shift stages, respectively. The characteristic of the driving force generated by the motor generator relative to the vehicle speed is indicated with a driving force characteristic curve M. Because a variable range of the vehicle speed covers a wide range including low speeds and high speeds, the motor generator employed for the vehicle is required to be designed to cover the wide variable range of the vehicle speed (i.e., the rotational speed), which is however practically difficult to achieve. On the other hand, although the running resistance of the vehicle relative to the vehicle speed varies in response to driving conditions of the vehicle such as a condition of a road surface on which the vehicle is driven, the running resistance is indicated with a running resistance characteristic curve R in a normal running state. In a high-speed range where the vehicle speed becomes equal to or higher than a predetermined value Va, i.e., in a range where the drive resistance characteristic curve R indicates higher level than the level indicated by the driving force characteristic curve M, the driving force for the driving wheels may hardly increase by the motor generator. Further, in such a high-speed range, an electrical efficiency of the motor generator is reduced, so that an electric power output is also reduced.

A need thus exists for a driving unit of a vehicle, which includes a motor generator and which improves fuel efficiency, prevents heat generation and reduces deterioration of fuel efficiency when the vehicle is driven at high speeds.

### SUMMARY OF THE INVENTION

According to an aspect of the present invention, a driving unit for a vehicle includes a plurality of gear sets, a plurality of switching clutches, a lever member, an output shaft, a motor generator and a separating clutch. The gear sets are provided in parallel with one another between an input shaft rotatably driven by an engine and a main shaft arranged in parallel with the input shaft. The switching clutches are respectively associated with a plurality of shift forks and operated by the shift forks to select one of the plurality of gear sets for establishing a first force transmitting path between the input shaft and the main shaft. The lever member is supported for performing a selecting movement and a shifting movement. The lever member operates one of the plurality of switching clutches by performing the selecting movement to select one of the shift forks and by performing the shifting movement to move the selected shift fork. The output shaft is connected to the main shaft in parallel therewith for rotatably driving a plurality of driving wheels of the vehicle. The motor generator is connected to the output shaft via a force transmitting mechanism. The motor generator functions as a motor for driving the output shaft in cooperation with the engine when supplied with an electric current and functions as a generator when driven by the output shaft. The separating clutch is provided at the force transmitting mechanism for establishing a second force transmitting path between the output shaft and the motor generator. The separating clutch interrupts a force transmission between the output shaft and the motor generator when one of the gear sets for establishing the highest shift stage is selected by the lever member. The driving unit further includes a separating shifter supported to be movable in a direction of the selecting movement of the lever member between a first position and a second position. The separating clutch is connected to the separating shifter via an operational mechanism moving in association with the separating shifter to operate the separating clutch to be engaged when the separating shifter is located at the first position and to be released when the separating shifter is located at the second position. The lever member is engaged with the separating shifted located at the first position when one of the gear sets for establishing the highest shift stage is selected by the selecting and shifting movements of the lever member and operates the separating shifter to move to the second position by the selecting movement.

According to a driving unit for a vehicle such as an automobile, fuel efficiency of the vehicle is generally improved by means of the motor generator for the low-speed rotation in comparison with a state where the motor generator for high-speed rotation is employed. However, when the vehicle drives at high speeds and heat generation of the motor generator progresses, the motor generator requires to be cooled down. Further, in such a condition, fuel efficiency deteriorates. However, due to the driving unit described above, when one of the gear sets for establishing the highest shift stage is selected, the separating shifter is moved to the second position and the separating clutch is released, thus interrupting the force transmission between the output shaft and the motor generator. Therefore, even in a state where the motor generator for the low-speed rotation for improving fuel efficiency is employed, the motor generator does not require to be cooled down due to the heat generation when driving at high speeds, and further, fuel efficiency does not deteriorate. Further, the separating shifter for operating the separating clutch and the clutches for selecting the gear sets are operated by a common lever member. Therefore, a structure of the driving unit for the vehicle is simplifies and a cost for manufacturing the driving unit can be reduced.

Further according to another aspect of the present invention, the lever member includes a cylindrical main body portion, a first arm for switching the plurality of gears and a second arm for releasing an engagement of the separating clutch. The first arm and the second arm protrude from the main body portion in a radial direction thereof and provided separately from each other in an axial direction of the lever member. The selecting movement of the lever member includes a movement in an axial direction of the main body portion and the shifting movement of the lever member includes a movement in a rotational direction of the main body portion. The separating shifter includes a wall portion being parallel with the moving direction of the selecting movement of the lever member. A first engagement arm is provided at the separating shifter to protrude therefrom towards the main body portion of the lever member. The first engagement arm includes a first cutout engageable with the second arm pivoted in accordance with the shifting movement of the lever member when the first arm selects one of the shift forks for operating one of the plurality of clutches to select the gear set for establishing the highest shift stage and when the separating shifter is located at the first position. The operational mechanism includes a cam groove formed at the wall portion of the separating shifter in an inclined manner relative to the moving direction of the selecting movement of the lever member, and a driven pin slidably engaged with the cam groove and connected to a separating fork supported to be movable in a moving direction of e the plurality of shift forks to operate the separating clutch.

Due to the above described structure, a structure for operating the separating shifter by means of the lever member is simplified. Further, because the separating fork is arranged to move in parallel with the shift forks, the driving unit is structured to be adapted to a vehicle, such as a font-engine front-drive type vehicle and a rear-engine rear-drive type vehicle, in which the output shaft and the motor generator are arranged in parallel with the input shaft and the main shaft.

Still further according to another aspect of the invention, a second engagement arm is provided at the separating shifter to protrude towards the main body portion of the lever member and to face the first engagement arm with a space from the first engagement arm for allowing the second arm to pass therethrough. The second engagement arm includes a second cutout engageable with the second arm.

Still further according to another aspect of the invention, the second arm is engaged with the second cutout of the second engagement arm of the separating shifter located at the first position when the first arm selects one of the plurality of shift forks for operating one of the plurality of clutches to select one of the gear sets for establishing the second highest shift stage, and operates the separating shifter to move to the second position.

Due to the above described structure, in a condition where the second arm of the lever member selects the shift fork corresponding to the clutch for selecting the gear set for establishing the highest shift stage by the selecting movement of the lever member, the second arm can pivot to be engaged with any of the first cutout of the first engagement arm and the second cutout of the second engagement arm when the lever member rotates in any of the clockwise direction and the counterclockwise direction (in the direction of the shifting movement). Accordingly, not only when the gear set for establishing the highest shift stage is selected but also when the gear set for establishing the second highest shift stage is selected, the force transmission between the output shaft and the separating clutch is interrupted by moving the separating shifter to the second position and releasing the separating clutch. So configured, a range of the vehicle speeds at which the force transmission between the output shaft and the motor generator is interrupted is enlarged.

### BRIEF DESCRIPTION OF THE DRAWINGS

The foregoing and additional features and characteristics of the present invention will become more apparent from the following detailed description considered with reference to the accompanying drawings, wherein:

Fig. 1 is a schematic view illustrating an entire structure of a driving unit for a vehicle according to an embodiment of the present invention;

Fig. 2 is a side view partially illustrating a mechanism for operating clutches according to the embodiment;

Fig. 3 is a cross sectional view illustrating the mechanism for operating the clutches taken along line III-III in Fig. 2;

Fig. 4 is a cross sectional view illustrating the mechanism for operating the clutches taken along line IV-IV in Fig. 2;

Fig. 5 is a cross sectional view illustrating the mechanism for operating the clutches taken along line V-V in Fig. 4;

Fig. 6A is an explanatory view illustrating an operation of the mechanism for operating the clutches when a separating shifter is located at a first position according to the embodiment;

Fig. 6B is an explanatory side view illustrating of Fig. 6A;

Fig. 7A is an explanatory view illustrating the operation of the mechanism for operating the clutches when a lever member is engaged with the separating shifter located at the first position according to the embodiment;

Fig. 7B is an explanatory side view of Fig. 7A;

Fig. 8A is an explanatory view illustrating the operation of the mechanism for operating the clutches when the separating shifter is moved to a second position;

Fig. 8B is an explanatory side view of Fig. 8A;

Fig. 9A is a diagram schematically illustrating torque characteristics relative to a rotational speed of the motor generator for low-speed rotation according to a known art;

Fig. 9B is a diagram schematically illustrating torque characteristics relative to a rotational speed of the motor generator for high-speed rotation according to a known art; and

Fig. 10 is a diagram schematically illustrating characteristics of driving force and running resistance for the driving wheels relative to a vehicle speed, according to a known art.

### DETAILED DESCRIPTION

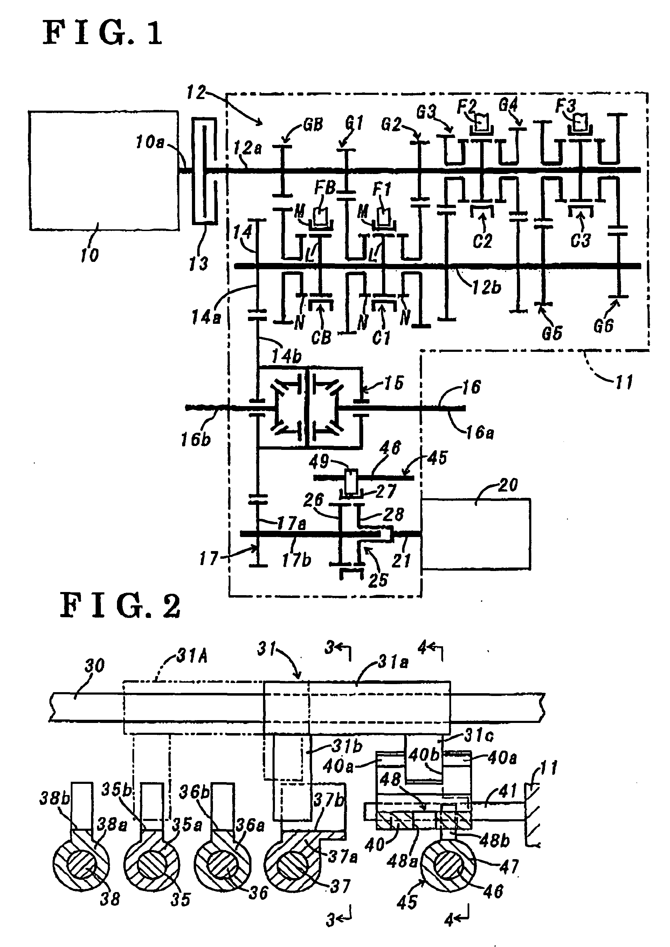

An embodiment of the present invention will be described hereinafter with reference to Figs. 1 to 8. According to the embodiment, a driving unit for a vehicle is adapted to a front-engine front-drive type vehicle, in which an input shaft and an output shaft of a transmission are arranged in parallel to each other, as a non-limiting example. The driving unit includes an engine 10, a transmission 12, a differential mechanism 15, a motor generator 20, a separating clutch 25, a separating shifter 40 and an operational mechanism 45.

An entire configuration of the driving unit will be described hereinafter with reference to Fig. 1. In a transmission case 11, an input shaft 12a and a main shaft 12b are arranged in parallel with each other and rotatably supported by the transmission case 11. A first gear set G1, a second gear set G2, a third gear set G3, a fourth gear set G4, a fifth gear set G5, a sixth gear set G6 and a reverse gear set GB are arranged in parallel with one another between the input shaft 12a and the main shaft 12b. Driving gears of the first and second gear sets G1, G2 are securely provided at the input shaft 12a, and driven gears of the first and second gear sets G1, G2 are rotatably supported by the main shaft 12b. Further, a first switching clutch C1 is provided between the driven gears of the first and second gear sets G1, G2. Driving gears of the third to sixth gear sets G3-G6 are rotatably supported by the input shaft 12a. A second switching clutch C2 is provided between the driving gears of the third and fourth gear sets G3, G4. A third switching clutch C3 is provided between the driving gears of the fifth and sixth gear sets G5, G6. Driven gears of the third to sixth gear sets, G3-G6 respectively, are securely provided at the main shaft 12b. A driving gear of the reverse gear set GB is securely provided at the input shaft 12a, and a driven gear of the reverse gear set GB is rotatably supported by the main shaft 12b. Further, a reverse switching clutch CB is provided between the input shaft 12a and the main shaft 12b. More specifically, the reverse switching clutch CB is provided in the vicinity of the driven gear of the reverse gear set GB. The driving gear and the driven gear of the reverse gear set GB are engaged with each other via an idling gear (not illustrated).

Each of the first to third switching clutches C1-C3 are structured by a known synchromesh mechanism, in which a sleeve M is spline-engaged with an outer circumference of a clutch hub L secured at one of the input shaft 12a and the main shaft 12b and is reciprocated in an axial direction to be engaged with engagement members N respectively seemed at the corresponding adjacent gears arranged at axial sides thereof (hereinafter, referred to as axial side gear) for selectively connecting such gears to the clutch hub L. Only one axial side gear is provided at the axial side of the clutch hub L of the reverse switching clutch CB, however the reverse switching clutch includes substantially the same structure as the first to third switching clutches C1-C3. Thus, the transmission 12 is structured with such components. The input shaft 12a of the transmission 12 is rotatably driven by a crankshaft 10a of the engine 10 via a clutch 13.

An output shaft 16 is arranged in parallel with the main shaft 12b. An output shat 16 is structured with a first portion 16a and a second portion 16b, which are coaxially connected with each other via the differential mechanism 15 at an intermediate portion of the output shaft 16. The first and second portions 16a, 16b are rotatably supported by the transmission case 11. Outer end portions of the first and second portions 16a, 16b are respectively connected to right and left driving wheels (not illustrated) via joints and drive shafts. The main shaft 12b and the output shaft 16 are connected to each other via an engagement between an output driving gear 14a, which is secured at one end of the main shaft 12b, and an output driven gear 14b, which is secured at a case of the differential mechanism 15.

The motor generator 20 is supported by the transmission case 11. Further, the motor generator 20 is arranged to be in parallel with the output shaft 16 and connected thereto via a force transmitting mechanism 17 and the separating clutch 25. The force transmitting mechanism 17 is structured with a clutch shaft 17b and a gear 17a. The clutch shaft 17b is supported by the transmission case 11 so as to be coaxial with the motor generator 20. The gear 17a is secured at one end of the clutch shaft 17b and is engaged with the output driven gear 14b secured at the differential mechanism 15. The separating clutch 25 is provided at the force transmitting mechanism 17 between the force transmitting mechanism 17 and the motor generator 20 and is structured with a known synchromesh mechanism, in which a sleeve 27 is spline-engaged with an outer circumference of a clutch hub 26 secured at an end portion of the clutch shaft 17b and is reciprocated in the axial direction to be engaged with an engagement member 28 secured at a rotor shaft 21 of the motor generator 20 for releasably connecting the clutch shaft 17b and the motor generator 20.

The motor generator 20 is employed for low-speed rotation. In a condition where a required driving force is not outputted only by the engine 10, the electric current is supplied to the motor generator 20 from a battery, so that the motor generator 20 is controlled to function as a motor for driving the output shaft 16 in cooperation with the engine 10. On the other hand, in a condition where the engine 10 is driven by the driving wheels or in a condition where the output of the engine 10 is greater than the required driving force, the motor generator 20 is controlled to function as a generator which generates electricity by being driven by the output shaft 16 and charges the battery with the generated electricity. Herein, a motor generator which is suitable for a vehicle driving from low to medium speeds corresponds to the motor generator for the low-speed rotation. A motor generator which is suitable for a vehicle driving from medium to high speeds corresponds to a motor generator for a high-speed rotation.

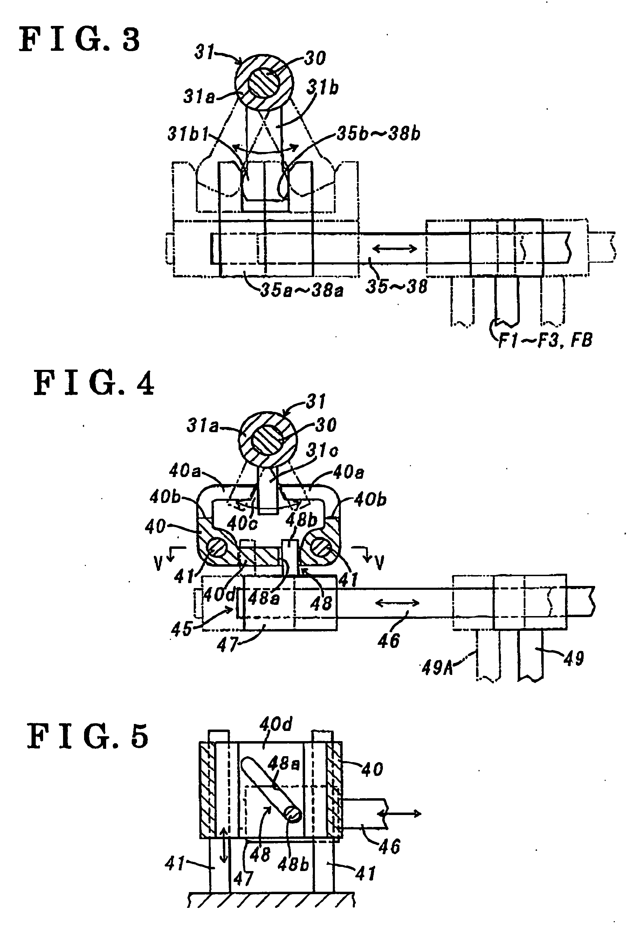

Next, a mechanism for operating the first to third switching clutches C1-C3 and the reverse switching clutch CB and selecting one of the gear sets G1-G6 and GB for establishing a power transmitting path between the input shaft 12 and the main shaft 12b (serving as a first force transmitting path) will be described hereinafter with reference to Figs. 2 and 3. Four fork shafts 35, 36, 37 and 38 are axially slidably supported in the transmission case 11 and arranged in parallel with the input shaft12a and the main shaft 12b. Further, the fork shafts 35, 36, 37 and 38 are arranged to be coplanar and in parallel with one another. Each of the fork shafts 35-38 is allowed to move in the axial direction thereof between a neutral position and shift positions defined at both axial sides of the neutral position. Further, shifting heads 35a, 36a, 37a and 38a are secured at the corresponding fork shafts 35, 36, 37 and 38, respectively. U-shaped cutouts 35b, 36b, 37b and 38b are formed at the corresponding shifting heads 35a, 36a, 37a and 38a, respectively. Further, a plurality of shift forks F1, F2, F3 an FB are associated with first to third switching clutches C1, C2, C3 and the reverse switching clutch CB, respectively. More specifically, the shift fork F1 is secured at the fork shaft 35 and is engaged with the sleeve M of the first switching clutch C1 for axially reciprocating the first switching clutch C1. In the same manner, the shift fork F2, the shift fork F3 and the reverse shift fork FB are respectively secured at the fork shafts 36, 37, 38 and are respectively engaged with the sleeves M of the second switching clutch C2, the third switching clutch C3 and the reverse switching clutch CB for axially reciprocating the corresponding switching clutches C2, C3 and CB. Still further, a shift-and-select shaft 30 is supported in the transmission case 11 so as to be in parallel with a plane (imaginary plane) on which the fork shafts 35-38 are arranged and to be perpendicular to the axial direction of the fork shafts 35-38. The shift-and-select shaft 30 is allowed to move in the axial direction thereof and in a pivotal (rotational) direction thereof. Hereinafter, the movement of the shift-and-select shaft 30 in the axial direction thereof is referred to as a selecting movement, and a direction of the selecting movement is referred to as a selecting direction. In the same manner, the movement of the shift-and select shaft 30 in the pivotal direction thereof is referred to as a shifting movement and a direction of the shifting movement is referred to as shifting direction. The shift-and-select shaft 30 includes an inner lever 31 (serving as a lever member) having a cylindrical main body portion 31a, a gear switching arm 31b (serving as a first arm), and a separating arm 31c (serving as a second arm). The main body portion 31a of the inner lever 31 is coaxially secured at the shift-and-select shaft 30. The gear switching arm 31b and the separating arm 31c are arranged to protrude from the cylindrical main body portion 31a and to be away from each other in the axial direction of the shift-and-select shaft 30. Herein, a distance between the gear switching arm 31b and the separating arm 31c corresponds to an axial distance between the shifting head 37a and the separating shifter 40. The inner lever 31 is supported by the shift-and-select shaft 30 for performing the selecting movement and the shifting movement together with the shift-and-select shaft 30. An outer circumferential portion of an end portion 31b1 of the gear switching arm 31b is partially formed in a cylindrical shape to be fitted into the U-shaped cutouts 35b-38b of the shifting heads 35a-38a substantially without a clearance therebetween and for passing within the cutouts 35b-38b.

According to the embodiment, the shift-and-select shaft 30 is automatically operated by a controlling apparatus which actuates in response to operational conditions of the vehicle, such as a position of the shift lever, an opening degree of a throttle, a vehicle speed, an engine torque, and the like. In a condition where each of the fork shafts 35-38 are located at the neutral position, the inner lever 31 moves in the selecting direction and selects one switching head from among the switching heads 35a-38a by the gear switching arm 31b. Then, the end portion 31b1 of the gear switching arm 31b is engaged into the U-shaped cutout of the selected switching head. Then, the gear switching arm 31b is operated to pivot in one of the shifting directions (one of the clockwise or counterclockwise directions when referring to Fig. 3) and moves the fork shaft (35, 36, 37 or 38) and the shift fork (F1, F2, F3 or FB), both of which correspond to the selected switching head. Thus, the switching clutches C1-C3 and CB are operated by the corresponding shift forks F1 to F3 and FB, and one of the gear sets is selected from among the first to sixth gear sets G1-G6 and the reverse gear set GB in correspondence with the selected shift fork and a moving direction thereof. For example, when the end portion 31b1 of the gear switching arm 31b is engaged into the U-shaped cutout of the switching head 35a and the gear switching arm 31b is operated to pivot in a clockwise direction in Fig. 3, the corresponding fork shaft 35 and the shift fork F1 is moved in a left axial direction in Fig. 3, thus selecting the first gear set G1 by moving the first switching clutch C 1 towards the first gear set G1. As described above, the force transmitting path (first transmitting path) is established between the input shaft 12a and the main shaft 12b via the selected gear set.

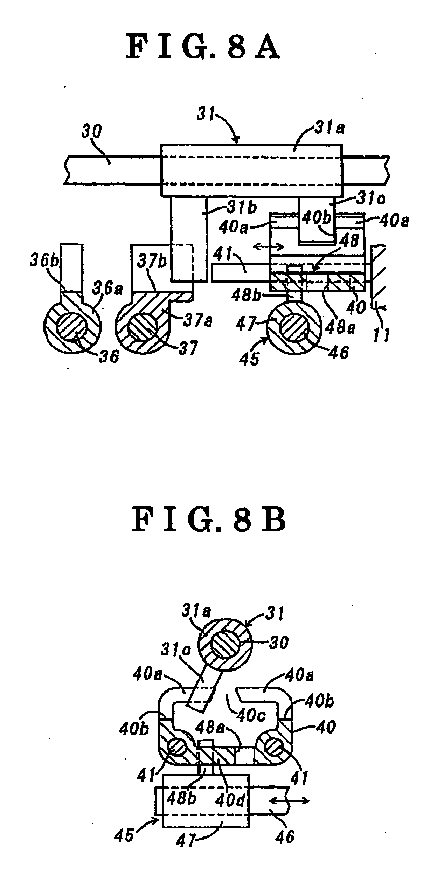

Next, with reference to Figs. 4 to 8, a mechanism for operating the separating clutch 25 will be described hereinafter. The mechanism for operating the separating clutch 25 is structured with the separating shifter 40 operated by the inner lever 31 for selecting one of the gear sets from among the first to six gear sets G1-G6 and the reverse gear set GB, and the operational mechanism 45 moving in association with the separating shifter 40 for transmitting the operation of the separating shifter 40 to the separating clutch 25. More specifically, as mainly illustrated in Figs. 2, 4 and 5, the separating shifter 40 is supported by a pair of shifter supporting pins 41 at a position (vertical position in Fig. 2) between the shift-and-select shaft 30 and the plane (imaginary plane) on which the fork shafts 35-38 are arranged. The shifter supporting pins 41 protrude in parallel with the shift-and-select shaft 30 from the transmission case 11 towards the fork shafts 35-38. Further, the separating shifter 40 is allowed to move in a direction parallel to the selecting movement of the inner lever 31 between a first position indicated in Figs. 2, 5 to 7 and a second position indicated in Fig. 8. The separating shifter 40 includes a pair of engagement arms 40a (serving as a first engagement arm and a second engagement arm) in the vicinity of the shift-and-select shaft 30, at which the inner lever 31 is provided. As best shown in Fig. 4, the engagement arms 40a protrude towards the main body portion 31a of the inner lever 31, and a cross sectional shape of each of the engagement arms 40a is formed in an inverted L-shape which faces the other engagement arm 40a when seen from a moving direction of the separating shifter 40 (i.e., from a left and right direction in Fig. 2). Inner ends of the engagement arms 40a face each other while including a space 40c (clearance) through which the separating arm 31c of the inner lever 31 passes. Further, as best shown in Fig. 2, cutouts 40b (serving as first and second cutouts) are formed at intermediate portions of end portions of the engagement arms 40a, respectively. The separating arm 31c of the inner lever 31 is allowed to engage into each of the cutouts 40b substantially without a clearance.

As best shown in Figs. 2, 4 and 5, the operational mechanism 45 includes a separating rod 46 and a cam mechanism 48. The separating rod 46 is arranged in parallel with the fork shafts 35-38 and substantially coplanar therewith and which is axially movably supported by the transmission case 11. A separating fork 49 and a switching head 47 are secured at the separating rod 46. The separating fork 49 is engaged with the sleeve 27 of the separating clutch 25 for reciprocating the sleeve 27 and is supported to be movable in the moving direction of the shift forks F1 to F3 and FB to operate the separating clutch 25. The switching head 47 is connected to the separating shifter 40 via the cam mechanism 48. The switching head 47 is provided adjacent to a wall portion 40d which is formed at a position away from the shift-and-select shaft 30 so as to be in parallel therewith. The cam mechanism 48 is structured with a cam groove 48a which is formed at the wall portion 40d of the separating shifter 40 in an inclined manner relative to the selecting direction of the shift-and-select shaft 30 (inner lever 31), i.e., so as to extend in an angled direction relative to the selecting direction of the shift-and-select shaft 30, and a driving pin 48b which is securely connected to the separating fork 49 via the switching head 47 and slidably engaged into the cam groove 48a.

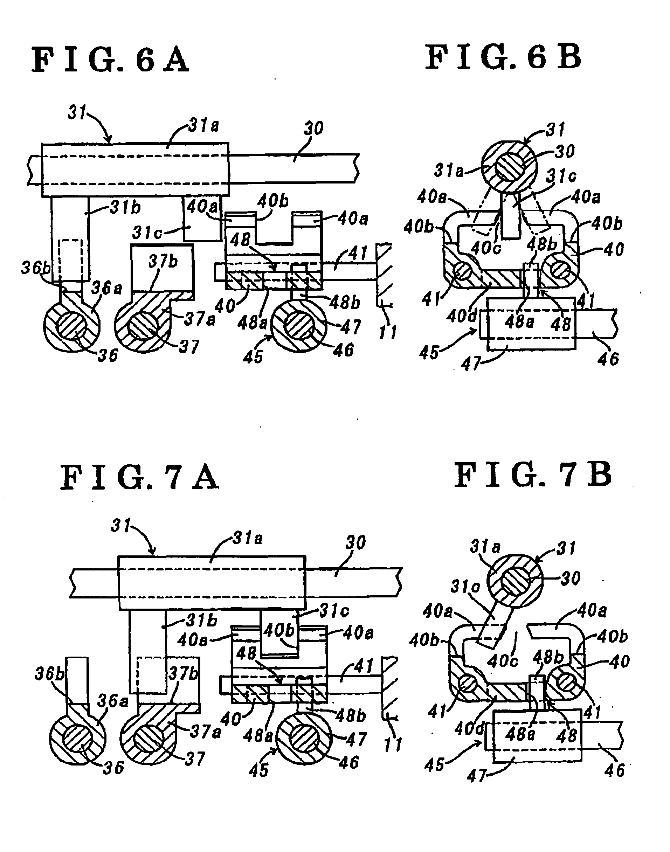

As illustrated in Figs. 6A and 6B, in a condition where the gear switching arm 31b of the inner lever 31 does not select the fork shaft 37 corresponding to the shift fork F3 which operates the third switching clutch C3 for selecting the sixth gear set G6 to establish the highest shift stage, the switching shifter 40 is positioned at the first position. In such a state, the separating fork 49 connected to the separating shifter 40 via the cam mechanism 48 and the separating rod 46 is moved in a right direction to be located at a position illustrated with a continuous line in Fig. 4. Further, the separating clutch 25 is engaged to establish a force transmitting path between the output shaft 16 and the motor generator 20 (serving as a second force transmitting path), so that the motor generator 20 is operated to rotate along with the output shaft 16. Then, in a condition where the gear switching arm 31b is engaged into the U-shaped cutout 37b of the switching head 37a by moving the gear switching arm 31b to the neutral position in the shifting direction (as indicated with a continuous line in Fig. 3) and then moving the gear switching arm 31b in the selecting direction through the cutouts 35b-38b and in a condition where the fork shaft 37 corresponding to the shift fork F3 which operates the third switching clutch C3 for selecting the sixth gear set G6 for establishing the highest shift stage is selected as illustrated in Fig. 7A, the separating arm 31c is aligned with the cutouts 40b of the engagement arms 40a of the separating shifter 40 in the axial direction of the shift-and-select shaft 30 as illustrated in Fig. 6B.

When the inner lever 31 is operated to pivot in the shifting direction in such a state and the gear switching arm 31b is pivoted in a direction for selecting the sixth gear set G6 for establishing the highest shift stage, the separating arm 31c also pivots in accordance with the gear switching clutch 31b and is engaged with the cutout 40b of one of the engagement arms 40a (herein, the first engagement arm 40a) as illustrated in Fig. 7B. Then, in such a condition, the selecting movement is performed for further moving the inner lever 31 in the right direction, and the separating shifter 40 located at the first position indicated in Fig. 7 is moved in the selecting direction along with the switching arm 31c and moved to the second position indicated in Fig. 8 from the first position. A length of the U-shaped cutout 37b of the switching head 37a is defined to be larger than other cutouts 35b, 36b and 38b, so that the gear switching arm 31b is not disengaged from the cutout 37b by the movement of the separating shifter 40 from the first position to the second position. The movement of the separating shifter 40 from the first position to the second position is converted to an axial movement of the separating rod 46 by means of the cam mechanism 48, in which the driving pin 48b is slidably moved within the cam groove 48a. Then, the separating fork 49 provided at the switching head 47 is moved in the left direction as indicated with a dashed line 49A in Fig. 4 from the position indicated with the continuous line in Fig. 4. Then, the sleeve 27 engaged with the separating fork 49 is moved in the left direction in Fig. 1 along with the separating fork 49. Thus, the separating clutch 25 is released and a force transmission between the output shaft 16 and the separating clutch 25 is interrupted.

When the shift-and-select shaft 30 is returned in the selecting direction and then the separating shifter 40 is returned to the first position as illustrated in Figs. 7A, the separating clutch 25 is engaged and the motor generator 20 is operated to rotate along with the output shaft 16. When the gear switching arm 31b is pivoted to the neutral position from the condition indicated in Fig. 7B and further pivoted towards the other engagement arm 40a (herein, the second engagement arm 40a), the fifth gear set G5 is selected and at the same time, the separating arm 31c is engaged with the second cutout 40b of the second engagement arm 40a. When the inner lever 31 is further moved in the right direction in the selecting direction in such a state, the separating shifter 40 is moved from the first position towards the second position in the same manner as described above, and the sleeve 27 engaged with the separating fork 49 is also moved as described above. Thus, the separating clutch 25 is released and the force transmission between the output shaft 16 and the separating clutch 25 (i.e., motor generator 20) is interrupted. In other words, according to the embodiment, not only in the condition where the sixth gear stage for establishing the highest shift stage is selected but also in the condition where the fifth gear set G5 for establishing the second highest shift stage is selected, the force transmission between the output shaft 16 and the separating clutch 25 is interrupted.

According to a driving unit, for a vehicle such as an automobile, including a motor generator, fuel efficiency of the vehicle measured by the 10-mode cycle test for rating the fuel efficiency in the 10-mode cycle of driving patterns (which is used in Japan to measure the fuel efficiency) is generally improved by means of the motor generator 20 for the low-speed rotation in comparison with a state where the motor generator for high-speed rotation is employed. However, when the vehicle drives at high speeds and heat generation of the motor generator progresses, the motor generator requires to be cooled down. Further, in such a condition, fuel efficiency deteriorates. However, according to the embodiment described above, when the sixth gear set G6 for establishing the highest shift stage and the fifth gear set G5 for establishing the second highest shift stage are selected, the separating shifter 40 is moved to the second position and the separating clutch 25 is released, thus interrupting the force transmission between the output shaft 16 and the motor generator 20. Therefore, even in a state where the motor generator 20 for the low-speed rotation for improving fuel efficiency is employed, the motor generator 20 does not require to be cooled down due to the heat generation when driving at high speeds, and further, fuel efficiency does not deteriorate.

Further according to the embodiment described above, the separating shifter 40 for operating the separating clutch 25 is supported movably in parallel with the selecting direction of the inner lever 31 for operating the first to third switching clutches C1-C3 and the reverse switching clutch CB. Further, the separating arm 31c for pivoting by the shifting movement is moved by engaging the same with the cutout(s) 40b formed at the engagement arm(s) 40a of the separating shifter 40, and the separating shifter 49 and the transmission 12 are operated with the common inner lever 31. Therefore, a structure of the driving unit for the vehicle is simplified and a cost for manufacturing the driving unit can be reduced.

Still further according to the embodiment, the cam mechanism 48 is provided between the separating shifter 40 and the switching head 47 at which the separating fork 49 is integrally connected. Further, the separating fork 49 is arranged to move in parallel with the shift forks F1 to F3 and the shift fork FB for operating the corresponding switching clutches C1-C3 and the reverse switching clutch CB. Accordingly, the driving unit is structured to be adapted to a vehicle, such as a font-engine front-drive type vehicle and a rear-engine rear-drive type vehicle, in which the output shaft 16 and the motor generator 20 are arranged in parallel with the input shaft 12a and the main shaft 12b.

Still further according to the embodiment, the pair of engagement arms 40a (first and second engagement arms) at which the cutouts 40b (first and second cutouts) are respectively formed is provided at the separating shifter 40 so as to face each other. Accordingly, in a condition where the shift fork F3 corresponding to the switching clutch C3 for operating the sixth gear set G6 for establishing the highest shift stage and the fifth gear set G5 for establishing the second highest shift stage is selected, the separating arm (second arm) 31b pivots to be engaged with any of the cutouts 40b (first and second cutouts) of the pair of engagement arms 40a (first and second engagement arms) when the inner lever 31 rotates in any of the clockwise direction and the counterclockwise direction (i.e., in the shifting direction). Therefore, not only when the sixth gear set G6 is selected but also when the fifth gear set G5 is selected, the force transmission between the output shaft 16 and the separating clutch 25 is interrupted. So configured, a range of the vehicle speeds at which the force transmission between the output shaft 16 and the motor generator 20 is interrupted is enlarged. The present invention is not limited as described above. Alternatively, one engagement arm 40a including the cutout 40b may be provided at one side of the separating shifter 40 so that the separating arm 31 c may be engaged with the cutout 40b, and the force transmission between the output shaft 16 and the separating clutch 25 may be interrupted by moving the inner lever 31 further in the selecting direction, only in a condition where the sixth gear set G6 for establishing the highest shift stage is selected.

Still further according to the above described embodiment, the transmission 12 includes six speed shift stages. However, the number of speed shift stages may be lower or greater than six. Further, more than two separating shifters 40 for interrupting the force transmission between the motor generator 20 and the output shaft 16 of the transmission may be provided. So configured, a range of high speed shift stages, at which the force transmission between the motor generator 20 and the output shaft 26 is interrupted, may be modified with respect to the number of shift stages and type of vehicles.

## Claims

1. A driving unit for a vehicle, comprising
a plurality of gear sets (G1, G2, G3, G4, G5, G6, GB) provided in parallel with one another between an input shaft (12a) rotatably driven by an engine (10) and a main shaft (12b) arranged in parallel with the input shaft (12a);
a plurality of switching clutches (C1, C2, C3, CB) respectively associated with a plurality of shift forks (F1, F2, F3, FB) and operated by the shift forks (F1, F2, F3, FB) to select one of the plurality of gear sets (G1 G2, G3, G4, G5, G6, GB) for establishing a first force transmitting path between the input shaft (12a) and the main shaft (12b);
a lever member (31) supported for performing a selecting movement and a shifting movement, the lever member (31) operating one of the plurality of switching clutches (C1, C2, C3, CB) by performing the selecting movement to select one of the shift forks (F1, F2, F3, FB) and by performing the shifting movement to move the selected shift fork;
an output shaft (16) connected to the main shaft (12b) in parallel therewith for rotatably driving a plurality of driving wheels of the vehicle;
a motor generator (20) connected to the output shaft (16) via a force transmitting mechanism (17) and functioning as a motor for driving the output shaft (16) in cooperation with the engine (10) when supplied with an electric current, the motor generator (20) functioning as a generator when driven by the output shaft (16); and
a separating clutch (25) provided at the force transmitting mechanism (17) for establishing a second force transmitting path between the output shaft (16) and the motor generator (20), the separating clutch (25) interrupting a force transmission between the output shaft (16) and the motor generator (20) when one of the gear sets (G1, G2, G3, G4, G5, G6, GB) for establishing the highest shift stage is selected by the lever member (31), wherein
the driving unit further comprises a separating shifter (40) supported to be movable in a direction of the selecting movement of the lever member (31) between a first position and a second position,
the separating clutch (25) is connected to the separating shifter (40) via an operational mechanism (45) moving in association with the separating shifter (40) to operate the separating clutch (25) to be engaged when the separating shifter (40) is located at the first position and to be released when the separating shifter (40) is located at the second position, and wherein
the lever member (31) is engaged with the separating shifter (40) located at the first position when one of the gear sets (G6) for establishing the highest shift stage is selected by the selecting and shifting movements of the lever member (31) and operates the separating shifter (40) to move to the second position by the selecting movement.

2. A driving unit for a vehicle according to claim 2, wherein
the lever member (31) includes a cylindrical main body portion (31a), a first arm (31b) for switching the plurality of gears and a second arm (31c) for releasing an engagement of the separating clutch (25), the first arm (311b) and the second arm (31c) both protruding from the main body portion (31a) in a radial direction thereof and provided separately from each other in an axial direction of the lever member (31),
the selecting movement of the lever member (31) includes a movement in an axial direction of the main body portion (31a) and the shifting movement of the lever member (31) includes a movement in a rotational direction of the main body portion (31a),
the separating shifter (40) includes a wall portion (40d) being parallel with the moving direction of the selecting movement of the lever member (31),
a first engagement arm (40a) is provided at the separating shifter (40) to protrude therefrom towards the main body portion (31a) of the lever member (31), the first engagement arm (40a) includes a first cutout (40b) engageable with the second arm (31 c) pivoted in accordance with the shifting movement of the lever member (31) when the first arm (31b) selects one of the shift forks (F3) for operating one of the plurality of clutches (C3) to select the gear set (G6) for establishing the highest shift stage and when the separating shifter (40) is located at the first position, and wherein
the operational mechanism (45) includes a cam groove (48a) formed at the wall portion (40d) of the separating shifter (40) in an inclined manner relative to the moving direction of the selecting movement of the lever member (31), and a driven pin (48a) slidably engaged with the cam groove (48a) and connected to a separating fork (49) supported to be movable in a moving direction of e the plurality of shift forks (F1, F2, F3, FB) to operate the separating clutch (25).

3. A driving unit for a vehicle according to claim 2, wherein
a second engagement arm (40a) is provided at the separating shifter (40) to protrude towards the main body portion (31a) of the lever member (31) and to face the first engagement arm (40a) with a space (40c) from the first engagement arm (40a) for allowing the second arm (31c) to pass therethrough, the second engagement arm (40a) includes a second cutout (40b) engageable with the second arm (31c).

4. A driving unit for a vehicle according to claim 3, wherein
the second arm (31 c) is engaged with the second cutout (40b) of the second engagement arm (40a) of the separating shifter (40) located at the first position when the first arm (31b) selects one of the plurality of shift forks (F3) for operating one of the plurality of clutches (C3) to select one of the gear sets (G5) for establishing the second highest shift stage, and operates the separating shifter (40) to move to the second position.
